# EUROPÄISCHE PATENTANMELDUNG

(11) **EP 0 818 295 A1**
(43) Veröffentlichungstag der Anmeldung: **14.01.1998**
(21) Anmeldenummer: 97111669.4
(22) Anmeldetag: 09.07.1997
(51) Int. Cl.: B29C 45/28, B29C 45/27

(54) **Nadelverschlussdüsensystem für ein Kunststoff-Spritzgiesswerkzeug, insbesondere zur Verarbeitung von Silikonkautschuken**

(30) Priorität: 10.07.1996 DE 19627680
(71) Anmelder: Lederer GmbH, 74601 Öhringen (DE)
(72) Erfinder: Weigele, Dieter, 74613 Ohringen (DE); Rudnik, Michael, 74613 Ohringen (DE); Lederer, Herman, 74613 Öhringen (DE)
(74) Vertreter: Weitzel, Wolfgang, Dr.-Ing. Patentanwalt

(57) **Zusammenfassung**

Die Erfindung betrifft ein Nadelverschlußdüsensystem mit einer Nadelverschlußdüse (1), umfassend einen Düsenkörper, der eine Austrittsöffnung (5) und eine Zufuhröffnung (3) für die Kunststoffmasse aufweist sowie einer im Düsenkörper angeordneten, in Längsrichtung axialverschiebbaren Nadel (14) und einer Betätigungsvorrichtung (18) zur Betätigung der im Düsenkörper axial in Längsrichtung verschiebbaren Nadel (14) der Nadelverschlußdüse (1). Die Erfindung ist dadurch gekennzeichnet, daß der Öffnungshub der in Längsrichtung axial verschiebbaren Nadel (14) der Nadelverschlußdüse (1) einstellbar ist.

## Beschreibung

Die Erfindung betrifft ein Nadelverschlußdüsensystem gemäß dem Oberbegriff des Anspruches 1, ein Kunststoff-Spritzgießwerkzeug mit mindestens einem solchen Nadelverschlußdüsensystem sowie die Verwendung eines derartigen Kunststoff-Spritzgießwerkzeuges als Kaltkanalangußsystem zur Verarbeitung von Silikonkautschuk.

Aus dem Stand der Technik sind federbetätigte Nadelverschlußdüsen bekannt geworden, die auf ihre Verwendbarkeit in der Spritzgießverarbeitung hin eingehend untersucht wurden (siehe auch der Artikel "Rundum dicht" in Plastverarbeiter, 47. Jahrgang, 1996, Nr. 3). Nadelverschlußdüsen weisen gegenüber offenen Düsen, wie sie bekanntermaßen bei Spritzgießwerkzeugen im Stand der Technik bislang Verwendung fanden, den Vorteil eines kontrollierten Druckaufbaues in der Kavität auf. Des weiteren kann bei Nadelverschlußdüsen durch das Verschließen der Öffnung gegenüber offenen Systemen eine Angußminimierung erreicht werden.

Angußsysteme, die Nadelverschlußdüsen umfassen, sogenannte Nadelverschlußdüsensysteme, sind bekannt geworden, weisen aber derzeit eine Vielzahl von Nachteilen auf. So ist bei den bekannt gewordenen Systemen nur ein passives Öffnen und aktives Verschließen der Austrittsöffnung mittels der in der Düse axial verschiebbaren Nadel möglich. Dies hat den Nachteil, daß die Kavität nicht kontrolliert befüllt werden kann.

Der Kavitätsfüllvorgang wird bei einem derartigen System dadurch gesteuert, daß in die Zufuhrleitung eine Drossel zur Einstellung der Druckverteilung der Kunststoffmasse zur Düse eingebracht wird. Die Drossel ermöglicht es, durch eine Querschnittsverengung den Materialstrom zu regeln. Allerdings ergibt sich hierbei das Problem, daß die Luft in der Kavität nur unkontrolliert verdrängt werden kann. Dies ist darauf zurückzuführen, daß die über die Drossel eingebrachte Querschnittsverengung im Zufuhrkanal einen kontrollierten Druckaufbau zur Düse erschwert, im ungünstigsten Falle sogar unmöglich macht. Aufgrund der nur ungenügenden Luftverdrängung während des Füllvorganges, verbleibt bei diesen Systemen immer ein Luftrest in der befüllten Kavität, was zu Qualitätsverlusten und schlecht reproduzierbaren Anspritzverhältnissen führt.

Es ist daher Aufgabe der Erfindung, ein gegenüber dem Stand der Technik verbessertes Nadelverschlußdüsensystem anzugeben, mit dem die Nachteile des Standes der Technik vermieden werden können. Erfindungsgemäß wird diese Aufgabe dadurch gelöst, daß ein Nadelverschlußsystem gemäß dem Oberbegriff nach Anspruch 1 derart ausgebildet wird, daß der Öffnungshub der axial verschiebbaren Nadel der Nadelverschlußdüse einstellbar ist. Dies ermöglicht die Einstellung der Austrittsöffnung durch Änderung des Düsenanschnittquerschnittes über die Nadelstellung. Somit können gegenüber dem Stand der Technik sehr konstante Anspritzvernältnisse und damit eine exakte Reproduzierbarkeit erzielt werden. Des weiteren kann der Kavitätsfüllvorgang leicht justiert und damit das Werkzeug in der Balance auf einfache Art und Weise abgestimmt werden, d.h. insbesondere bei Mehrfachwerkzeugen ist es möglich, durch die Einstellung der Nadelverschlußdüse in allen Kavitäten einen annähernd gleichen Druckaufbau zu erzielen.

In einer Weiterbildung der Erfindung wird vorgeschlagen, in der Düse eine Temperiervorrichtung vorzusehen.

Dies ist insbesondere bei der Verarbeitung von Silikonkautschukmaterial, aber auch von Thermoplasten, von Vorteil.

In ersterem Fall ist die Düse gegenüber der Kontureinheit gekühlt. Der gekühlte, unvernetzte Silikonkautschuk wird aus der gekühlten Düse in die beheizte Kontureinheit eingespritzt, wo aufgrund der höheren Temperatur die erwünschte Vernetzung des Materials stattfindet und damit das Formte ausgebildet wird. Die Kühlung der Düse, die mit ihrem Anfangsabschnitt in die Kontureinheit eingeführt wird, bis sie mit der Öffnung der Formkavität zur Anlage kommt, ist erforderlich, da ein Wärmeübergang von der beheizten Kontureinheit auf die Düse zu einer unerwünschten Vernetzung des Silikonmaterials bereits in der Düse führen würde.

Bei Thermoplasten ist vorgesehen, die Temperiereinrichtung als Heizung auszubilden, da hier gerade die umgekehrten Fertigungsverhältnisse vorliegen. Das Einspritzen des Thermoplasten erfolgt bei hoher Temperatur, wohingegen zum Erstarren in der Kontureinheit die Temperatur abgesenkt werden muß.

Besonders vorteilhaft ist es, die Temperiervorrichtung als einen im Düsenkörper angeordneten Hohlkörper auszubilden, in dessen Inneren die Nadel ebenso wie das zu spritzende Material geführt wird. Der Hohlkörper umfaßt des weiteren zur Düsenwand des Düsenkörpers hin ein zweigängiges Gewinde zum Umlauf der Kühl- bzw. Heizflüssigkeit. Die Ausbildung mit einem zweigängigen Gewinde ermöglicht eine gegenüber dem Stand der Technik gleichmäßigere Kühlung bzw. Heizung in der gesamten Düse bis hin zur Düsenöffnung. Hierdurch können auch in der Zufuhrleitung bereits auftretende, unerwünschte Temperaturabsenkungen bei Thermoplasten bzw. Erhöhungen beim Silikonkautschuk aufgrund der langen Transportwege ausgeglichen werden. Durch die Ausbildung des Hohlkörpers mit Gewindegängen werden außerdem die Wände des Düsenkörpers durch den eingebrachten Kühlhohlkörper verstärkt. Dies erlaubt bei gegenüber dem Stand der Technik dünnerer Wandstärke des Düsenkörpers den Aufbau von höheren Drücken im Innern der Düse.

Die dünnen Wandstärken wiederum erlauben den Bau von Nadeldüsensystemen mit sehr geringen Abmessungen und eine eng benachbarte Anordnung in einem Spritzgießwerkzeug. In einem Kunststoff-Spritzgießwerkzeug können daher bislang nicht erreichte Stichmaßabstände realisiert werden.

In einer besonders vorteilhaften Ausführungsform ist vorgesehen, daß die Nadel der Nadelverschlußdüse mit der Betätigungsvorrichtung über eine flexible Kupplung verbunden ist.

Vorteilhafterweise ist die flexible Kupplung derart ausgebildet, daß die Nadel sich quer zur Achsrichtung des Düsenkörpers bewegen kann. Diese Ausbildung hat zum Vorteil, daß unterschiedliche Wärmeausdehnungen des kalten Anspritzquer- bzw. Betätigungssystems und der Anspritzdüse im heißen Teil des Werkzeuges kompensiert werden können. Die Wärmeunterschiede, die zwischen dem vorderen Düsenkörper im Werkzeug und dem Betätigungssystem bestehen, führen zu unterschiedlichen Wärmeausdehnungen, wobei die Wärmedehnungsunterschiede 0,5 bis 1 mm je nach Größe des Werkzeuges betragen können. Die Wärmeausdehnung führt zu einem Versatz der Nadel in dem Düsenkörper quer zur Achsrichtung derselben. Durch die erfindungsgemäße Ausbildung der flexiblen Kupplung wird verhindert, daß die Nadel aufgrund des Versatzes bricht.

Um auch bei hohen Drücken in der Kavität einen sicheren Verschluß der Eintrittsöffnung für das Material in die Kavität bzw. des Angußortes mit der Nadel zu gewährleisten, wird die Betätigungsvorrichtung des Nadelverschlußsystems vorteilhafterweise als Hydrauliksystem ausgebildet.

Gegenüber den bislang verwendeten Betätigungsvorrichtungen, auf der Basis von Pneumatikzylindern, weist der Hydraulikantrieb nicht nur den Vorteil einer hohen aktiven Schließkraft auf, sondern auch den einer sehr schnellen und exakten Einstellung des Öffnungs- und Schließzeitpunktes. Des weiteren ist die Hydraulikflüssigkeit weniger kompressibel als das Arbeitsmedium im Pneumatikzylinder, so daß auch bei hohen Drücken in der Kavität ein sicherer Verschluß vorliegt.

Um zu verhindern, daß Arbeitsflüssigkeit aus dem Hydraulikantriebssystem in den Düsenkörper gelangt und sich dort unerwünschterweise mit dem zu verarbeitenden Kunststoff vermischt, ist in einer weitergebildeten Ausführungsform vorgesehen, den Düsenkörper durch einen Zwischenraum von der Betätigungsvorrichtung zu trennen. Eventuell austretende Hydraulikflüssigkeit wie auch Kunststoffmaterial aus dem Düsenkörper wird in diesem Raum aufgefangen und abgeführt. Hierdurch werden Materialverschlechterungen in dem zu spritzenden Kunststoff durch Leckagen des Antriebssystems ausgeschlossen. Des weiteren erlaubt der eingebrachte Zwischenraum die Aufnahme der flexiblen Kupplung, deren Vorteile bereits zuvor beschrieben wurden.

Um eine qualitativ hochwertige Verarbeitung beispielsweise von Silikonkautschuken mit einem geringen Stichmaßabstand zu ermöglichen, wie zuvor dargestellt, ist erfindungsgemäß vorgesehen, daß Kunststoff-Spritzgießwerkzeuge für derartige Verwendungen mindestens ein erfindungsgemäßes Nadelverschlußdüsensystem umfassen.

Bevorzugt sind die Kunststoff-Spritzgießwerkzeuge derart ausgebildet, daß die Nadelverschlußdüsen des Nadelverschlußdüsensystems in einem Düsenblock und die der einzelnen Nadel des Nadelverschlußdüsensystems zugeordneten Betätigungsvorrichtungen in einem Antriebsblock angeordnet sind, wobei der Düsenblock mit dem Antriebsblock eine Einheit ausbilden, die mit dem Rest des Werkzeuges, der die Kavitäten aufnimmt, lösbar bspw. mit Schnellspannvorrichtungen verbunden ist.

Durch die lösbare Verbindung von Düseneinheit und Werkzeug ist es möglich, bei Verwendung von Wechselelementen, den Kavitätenbereich sehr schnell austauschen zu können und damit bei nur geringen Rüstzeiten das Werkzeug jedem Bedarfsfall anzupassen.

Bei dem erfindungsgemäßen Kunststoff-Spritzgießwerkzeug ist vorgesehen, daß die Vielzahl der Nadelverschlußdüsen der Nadelverschlußdüsensysteme in einer Ebene mit Abstand zueinander angeordnet sind, wodurch sich ein bestimmter Stichmaßabstand ergibt. Wird der Stichmaßabstand sehr gering gewählt, so ist es mit Hilfe dieser Erfindung erstmals möglich, bspw. Tastaturen mit nur sehr eng beabstandeten Tastaturelementen, wie sie beispielsweise in Fernbedienungen oder Computertastaturen vorkommen, in einem automatischen Verfahren herstellen zu können. Die erfindungsgemäße Anordnung ermöglicht die Realisierung von Stichmaßabständen zwischen benachbarten Nadeln bis herab zu 1 mm. In einer besonders bevorzugten Ausführungsform werden Stichmaßabstände zwischen 5 und 15 mm realisiert, die für das zuvor beschriebene Einsatzgebiet von besonderem Vorteil sind.

Wie bereits zuvor erwähnt, eignet sich das erfindungsgemäße Nadelverschlußsystem und die hiermit ausgestatteten Kunststoff-Spritzgießwerrkzeuge in besonderer Art und Weise für die Verarbeitung von Silikonkautschuk in sogenannten Kaltkanalangußsystemen. Ebenso ist es aber auch möglich, die Erfindung in Heißkanalangußsystemen zur Verarbeitung von Thermoplasten einzusetzen.

Die Erfindung soll nachfolgend beispielhaft anhand der Figuren beschrieben werden.

Es zeigen:
- Fig. 1: eine Prinzipskizze des erfindungsgemäßen Nadelverschlußsystems in einem Kaltkanalangußsystem;
- Fig. 2: eine Ausführungsform des erfindungsgemäßen Nadelverschlußsystems;
- Fig. 3: eine Draufsicht auf den Kühlhohlkörper des erfindungsgemäßen Nadelverschlußsystems;
- Fig. 4: einen Schnitt in Längsrichtung durch den Kühlhohlkörper.

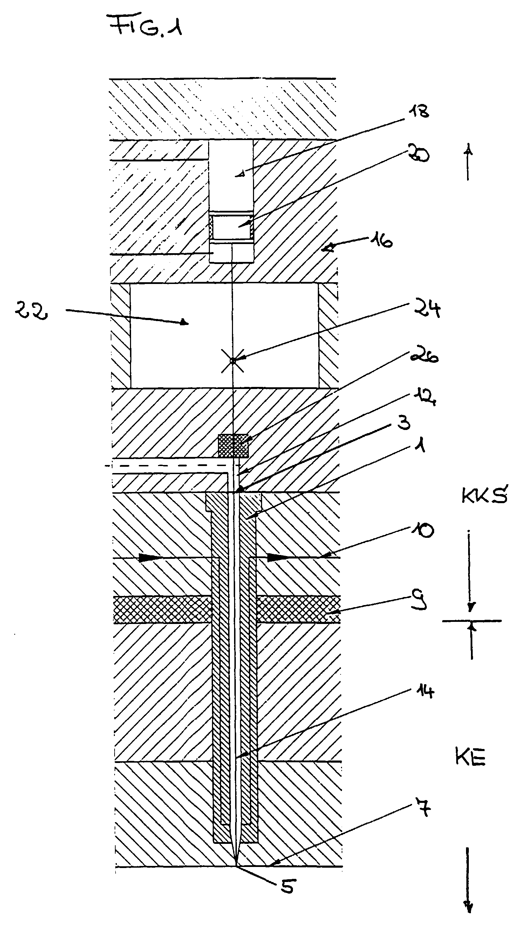

In Fig. 1 ist ein Nadelverschlußdüsensystem gemäß der Erfindung, das in einem Kaltkanalangußsystem für die Silikonkautschukverarbeitung Anwendung findet, dargestellt. Das Nadelverschlußdüsensystem weist eine Anspritzdüse 1 mit einer Zufuhröffnung 3 und einer Austrittsöffnung 5 für das zu verarbeitende Kunststoffmaterial auf. Die Austrittsöffnung 5 der Düse 1 befindet sich bei einem mit der Kontureinheit KE verbundenem Spritzgießwerkzeug innerhalb der Kontureinheit KE. In der Anbindungsebene 7 wird die Austrittsöffnung mit der Eintrittsöffnung in die Kontur- bzw. Formkavität der Kontureinheit KE verbunden. Die Kontureinheit KE wird im Falle der Verarbeitung von Silikonkautschuk auf Temperaturen zwischen ungefähr 100° C und 250° C aufgeheizt, so daß der aus der Düse austretende Silikonkautschuk, der auf wesentlich niedrigerer Temperatur gehalten wird, in der sich an die Austrittsöffnung anschließenden Konturkavität vernetzt und so ein formstabiles Kautschukformteil entsteht. Die Kontureinheit ist durch eine Isolierung 9 von dem Kaltkanalsystemteil KKS wärmemäßig entkoppelt. Der Kaltkanalsystemabschnitt KKS des Werkzeuges wird je nach Vernetzungsart auf einer Temperatur von ca. 10° C bis 120° C gehalten. Dadurch wird sichergestellt, daß der Silikonkautschuk in diesem Abschnitt unvernetzt vorliegt.

Um zu verhindern, daß in dem Bereich, in dem die Anspritzdüse in die Kontureinheit hineinragt, ein Wärmeübergang von der warmen Kontureinheit auf die Anspritzdüse stattfindet, ist vorgesehen, die Anspritzdüse mit einer Temperiervorrichtung 10 zu versehen. Diese ist in vorliegendem Fall als Kühleinrichtung ausgebildet, die das Innere der Anspritzdüse auf einer Temperatur, die der Temperatur im Kaltkanalsystem entspricht, also von ungefähr 10° C bis 120° C, hält. Ist eine derartige Temperierung nicht vorgesehen, oder nur ungenügend ausgebildet, so kommt es bereits innerhalb der Anspritzdüse zu einer Vernetzung des Silikonkautschukes, wodurch sich beispielsweise an den Düsenrändern unerwünschterweise Häute ausbilden können und der Spritzvorgang beeinträchtigt wird.

Die Zufuhr der Silikonmasse erfolgt über den Zufuhrkanal 12, der auch als gemeinsamer Zufuhrkanal für eine Vielzahl von hier nicht dargestellten, nebeneinanderliegend angeordneten Nadelverschlußdüsen dienen kann.

In der Mitte der Düse 1 ist die Verschlußnadel 14 angeordnet, die in axialer Richtung längs der Düsenkanalachse zum Öffnen und Schließen der Ausgangsöffnung verschiebbar angeordnet ist. Das axiale Verschieben der Nadel 14 erfolgt mittels einer Betätigungsvorrichtung, die in einem separaten Antriebsblock - in vorliegendem Fall hinter der Nadelverschlußdüse -, angeordnet ist. Die Betätigungsvorrichtung ist hier als Hydraulikantrieb 18 ausgebildet, wobei die axiale Bewegung der Nadel mittels Verschieben eines Kolbens 20 in einem Hydraulikzylinder erfolgt.

Der Antriebsblock 16, der den bzw. die Hydraulikantriebe einer bzw. mehrerer nebeneinanderliegender Nadelverschlußdüsen aufnimmt, ist von dem Düsenblock durch einen Zwischenraum 22 getrennt. Auf diese Art und Weise wird sichergestellt, daß bei eventuell auftretenden Leckagen des Hydraulikantriebssystems kein Hydrauliköl in den Kanal der Düse gelangt und sich dort unerwünschterweise mit dem zu verarbeitenden Kunststoff mischt.

Vielmehr werden derartige, aus dem Hydrauliköl austretende Rückstände in dem Zwischenraum aufgefangen und von dort entfernt.

Die einen Hydraulikantrieb umfassende Betätigungsvorrichtung ist mit der Verschlußnadel nicht direkt, sondern über eine flexible Kupplung 24 verbunden, die ein Wandern der Nadel aufgrund von Wärmeausdehnungsunterschieden zwischen der heißen Kontureinheit und dem gekühlten Kaltkanalabschnitt quer zur Längsachse des Düsenkanals erlaubt, ohne daß es hierbei zum Bruch der Nadel 14 kommt. Die Nadel 14 selbst wird durch eine Dichtung 26 aus dem Düsenkanal heraus in den Zwischenraum, in dem auch die Kupplung 24 angeordnet ist, geführt.

Die Einstellung des Materialstroms erfolgt im Gegensatz zum Stand der Technik nicht durch eine in der Zufuhrleitung angeordnete Drossel, mit der nur der Materialstrom geregelt werden kann, sondern dadurch, daß mittels des Hydraulikantriebes der Öffnungshub der Verschlußnadel und damit der Angußquerschnitt eingestellt wird. Damit ist eine Justierung des Kavitätsfüllvorganges und damit Abstimmung des Werkzeuges auf einfache Art und Weise möglich, ohne daß mechanische Änderungen vorgenommen werden müssen. Des weiteren erlaubt diese Art der Einstellung der Düse durch eine Änderung des Düsenanschnittquerschnittes über die Nadelstellung sehr konstante Anspritzverhältnisse und damit exakte Reproduzierbarkeit bei wiederholt gefahrenen Zyklen. Die Einstellung des Öffnungshubes erfolgt in der dargestellten Ausführungsform für jede Nadel eines Nadeldüsenverschlußsystemes durch Einstellung des Kolbenhubes des Hydraulikantriebes, der dieser Nadel zugeordnet ist. Die Einstellung des Kolbenhubes wiederum erfolgt mittels eines über eine Stellschraube einstellbaren Anschlagkolbens.

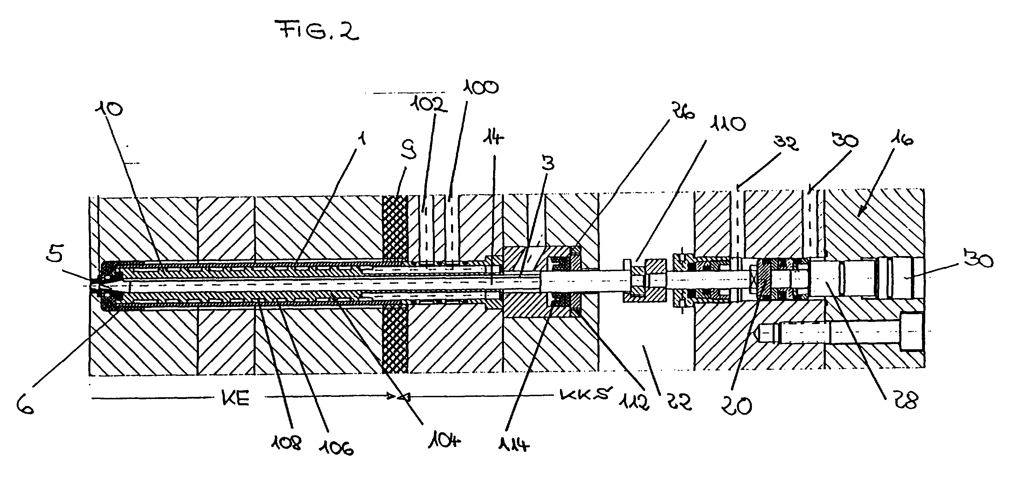

Wie bereits oben erwähnt, können eine Vielzahl von Nadelverschlußdüsensystemen, wie in Fig. 1 dargestellt, nebeneinander angeordnet werden, um auch ein Vielfachwerkzeug ausbilden zu können. Gemäß der Erfindung ist es hierbei wichtig sicherzustellen, daß jede der einzelnen Nadeln der unterschiedlichen Nadelverschlußdüsen in ihrem Öffnungshub einzeln einstellbar ist, beispielsweise dadurch, daß jedem Nadelverschlußventil ein eigener Hydraulikantrieb mit Stellschraube zugeordnet ist. Aufgrund der kompakten Bauweise der Anspritzdüsen, die insbesondere auch aus Fig. 2 ersichtlich wird, ist es möglich, mit Hilfe der erfindungsgemäßen Nadelverschlußsysteme in Mehrfachwerkzeugen Stichmaßabstände zu realisieren, die bis zu 1 mm herabreichen. In einer besonders ausgestalteten Ausführungsform ist es auch möglich, einen Stichmaßabstand zwischen 5 und 15 mm zu realisieren. Aufgrund dieses sehr eng wählbaren Stichmaßabstandes eignen sich Kaltkanalspritzgießwerkzeuge, die eine Vielzahl der erfindungsgemäßen Nadelverschlußdüsensysteme umfassen, vorzüglich für die Herstellung von Silikonkautschukformteilen mit eng beabstandeten Elementen, beispielsweise zur Herstellung von Leitfähigkeitsmatten für Tastaturen, die bis zu 110 Anspritzpunkte aufweisen können.

Als weiterer Vorteil ist zu erwähnen, daß das erfindungsgemäße Hydraulikantriebssystem eine sehr hohe aktive Schließkraft aufweist, die weit über der der aus Sicherheitsgründen bislang verwendeten Pneumatiksysteme liegt. Außerdem können die Zykluszeiten mit einer derartigen Antriebsvorrichtung für einen Spritzvorgang gegenüber dem Stand der Technik drastisch verkürzt werden. Als weiterer Vorteil ist aufgrund der freien Einstellbarkeit der Nadel die Anschnittgröße durch Einstellung des Öffnungshubes in weiten Bereichen variierbar und kann damit auf einfache Art und Weise den Artikel- und Produktverarbeitungserfordernissen angepaßt werden.

In Fig. 2 ist das erfindungsgemäße Nadelverschlußdüsensystem nochmals detaillierter dargestellt. Wiederum ist ein Nadelverschlußdüsensystem mit einer Nadelverschlußdüse dargestellt, die in die Kontureinheit hineinragt. Das Kaltkanalsystem KKS ist, wie in Fig. 1, von der Kontureinheit KE thermisch mittels einer Trennwand 9 entkoppelt. Die Nadelverschlußdüse umfaßt einen Düsenkörper 1, eine Austrittsöffnung 5 sowie eine Zufuhröffnung 3. Innerhalb des Düsenkörpers ist die in axialer Richtung verschiebbare Nadel 14 angeordnet. Im Bereich der Austrittsöffnung 5 ist zur wärmemäßigen Entkopplung von Düse und Werkzeug noch eine Überwurfkappe 6 vorgesehen, die bevorzugt aus einem Epoxidharz gefertigt sein kann.

In Fig. 2 können insbesondere Einzelheiten der erfindungsgemäßen Temperiervorrichtung 10 entnommen werden. Die Temperiervorrichtung 10 umfaßt einen Zufuhrkanal 100 für die Kühl- bzw. Heizflüssigkeit und einen Abfuhrkanal 102. Wesentlicher Bestandteil der Temperiervorrichtung ist der in den Düsenkörper eingebrachte Hohlkörper 104, der in seiner Mitte eine Bohrung für die Nadel 14 aufweist. An seinem äußeren Rand besitzt der Hohlkörper zur Düsenwand hin ein zweigängiges Gewinde 106, 108. In den ersten Gewindegang 106 wird das Kühlmittel eingebracht. Dieses strömt entlang des Gewindes in Richtung der Austrittsöffnung des Kunststoffmaterials radial um den Hohlkörper herum. Im Bereich der Austrittsöffnung des Kunststoffmaterials wird das Kühlmittel über eine Freidrehung in das zweite Gewinde geleitet, in dem die Kühlflüssigkeit wiederum radial um den Hohlkörper herum in Richtung der Abführöffnung 102 zurückströmt. Auf diese Art und Weise wird bei dem erfindungsgemäßen Nadelverschlußdüsensystem eine gleichmäßigere Kühlung insbesondere im Bereich der Nadelspitze als bisher im Stand der Technik üblich erzielt. Als weiterer Vorteil dieser Ausgestaltung der Temperiervorrichtung ist die zusätzliche Stabilität zu nennen, die der Düsenwand aufgrund der Gewindegänge, die die Düsenwand mittragen, verliehen wird. Auf diese Art und Weise ist es möglich, die Düsenwand selbst bei hohen Drücken sehr dünn ausbilden zu können, was wiederum sich in nur sehr geringen Abmessungen der Nadelverschlußdüse wiederspiegelt und es ermöglicht, den erfindungsgemäßen engen Stichmaßabstand zwischen benachbarten Düsen in einem Kunststoff-Spritzgießwerkzeug zu realisieren.

Die Zuführung der Kunststoffmasse erfolgt über eine gemeinsame Zufuhrleitung, die Teil eines Zufuhrsystems sein kann. Um im Zufuhrsystem bei einer Velzahl von Kavitäten einen gleichmäßigen Druckaufbau zu erzielen, wird vorteilhafterweise das Zufuhrsystem so ausgeführt, daß gleiche Fließlängen erhalten werden. Dies kann zu einer Ausbildung desselben mit mehreren Verteil-Ebenen führen. Wie schon bei der in Fig. 1 dargestellten Ausführungsform ist der Antriebsblock 16 vom die Nadelverschlußdüsen tragenden Block über einen Zwischenraum 22 getrennt. Der Zwischenraum 22 dient dazu, im Falle einer Leckage des Hydraulikantriebsystems eventuell austretendes Hydrauliköl aufzunehmen und zu verhindern, daß dieses in den Düsenteil eintritt und sich dort unerwünschter Weise mit dem zu spritzenden Kunststoff mischt. Wie schon in Fig. 1 dargestellt, ist die aus dem Düsenkörper heraustretende Nadel, die zum Antriebssystem geführt wird, mittels einer Dichtung 26 gegenüber dem Zwischenraum 22 abgedichtet.

Innerhalb des Zwischenraumes 22 ist eine flexible Kupplung angeordnet, die die Nadel der Nadelverschlußdüse mit dem jeweiligen Hydraulikantriebssystem verbindet. Die flexible Kupplung erlaubt aufgrund der eingebrachten Öffnung 110 einen seitlichen Versatz der Nadel 14, beispielsweise aufgrund von Wärmeausdehnungsunterschieden, ohne daß die Verbindung zum Antriebssystem unterbrochen wird oder die Nadel bricht. Um dieses seitliche Wandern der Nadel ermöglichen zu können, ist die Dichtung 26 mit axialen, umlaufenden Ausnehmungen 112 und 114 versehen.

Wie bereits schematisch in Fig. 1 angedeutet, weist das Hydraulikantriebssystem einen Hydraulikkolben auf, dessen Kolbenstellung direkt mit der Nadelstellung korrelliert. Zur Betätigung des Kolbens wird über die Leitungen 30 bzw. 32 Hydraulikflüssigkeit kontrolliert zu- bzw. abgeführt und somit die Kolbenstellung verändert. Die kontrollierte Zu- bzw. Abführung kann mit Hilfe von einstellbaren Ventilen vorgenommen werden. Das erfindungsgemäße Nadelverschlußsystem kann aufgrund der Einstellbarkeit des Hydraulikantriebs nicht nur kontrolliert die Austrittsöffnung verschließen, vielmehr ist es mit diesem System auch möglich, eine kontrollierte Öffnung durch Ansteuern des Kolbens bzw. Schiebers zu erreichen. Im Gegensatz zu den bisherigen Systemen erfolgt bei dem erfindungsgemäßen somit das Öffnen nicht mehr alleine aufgrund des Spritzdruckes, sondern durch Betätigung des Schiebers. Dadurch wird es möglich, Nadeln mit geringerem Durchmesser als bislang verwenden zu können. Die Einstellung des Öffnungshubes der Nadel, der die Größe der Austrittsöffnung für die Kunststoffmasse aus dem Düsenkörper bestimmt, erfolgt in der dargestellten Ausführungsform mittels eines axial verschiebbaren Anschlagkolbens 28 und einer Stellschraube 30, wobei der Anschlagkolben 28 den Kolbenhub des Hydraulikkolbens 20 begrenzt und damit das Zurückziehen der Nadel 14 in den Düsenkörper 1. Dies ermöglicht die Einstellung einer bestimmten Größe der Austrittsöffnung 5.

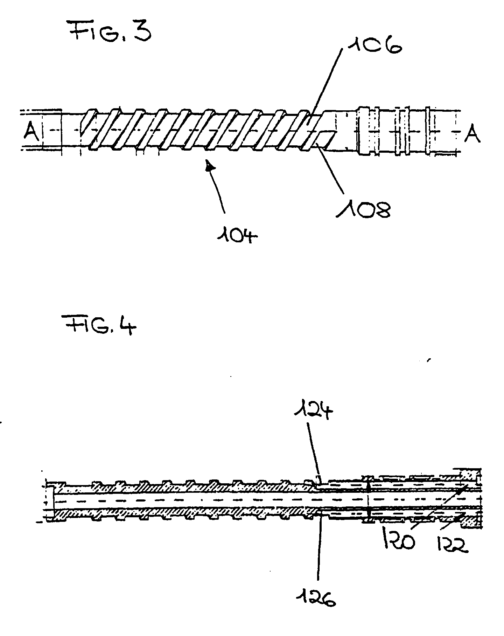

In den Fig. 3 und 4 ist nochmals der Teil des Hohlkörpers 104, der die Temperiervorrichtung 10 umfaßt, in einer Draufsicht und im Längsschnitt A-A gezeigt.

Die Draufsicht auf den im allgemeinen kreisrunden Hohlkörper 104 zeigt deutlich das zweigängige Gewinde mit dem ersten Gewindegang 106 und dem zweiten Gewindegang 108 .

Der Längsschnitt A-A zeigt die in den Hohlkörper 104 eingearbeiteten Leitungen 120, 122, die über eine Aus- bzw. Eintrittsöffnung 124 bzw. 126 das Kühl- bzw. Heizmittel vom Zufuhrkanal 100 des Düsenkörpers zum ersten Gewindegang 106 und vom zweiten Gewindegang 108, in dem das Kühl/Heizmittel zurückströmt, in den Abfuhrkanal 102 leitet.

Wie bereits weiter oben ausführlich beschrieben, ist es möglich, eine Vielzahl der erfindungsgemäßen Nadelverschlußdüsensysteme in einem Block nebeinander mit Abstand anzuordnen, um so ein Kunststoff-Spritzgießwerkzeug zur Verfügung zu stellen, das eine Vielzahl von Anspritzpunkten für komplexe Formteile, beispielsweise Tastaturen für Computer, herzustellen. Aufgrund der erfindungsgemäßen, besonders kompakten Bauform ist es hierbei möglich, sehr geringe Stichmaßabstände zu realisieren.

Damit erlaubt es das erfindungsgemäße Nadelverschlußdüsensystem erstmals, maschinell mit einer exakten Reproduzierbarkeit und sehr konstanten Anspritzverhältnissen auch komplexe Formteile, insbesondere aus Silikonkautschuk, herstellen zu können.

## Patentansprüche

1. Nadelverschlußdüsensystem mit
1.1 einer Nadelverschlußdüse (1), umfassend einen Düsenkörper, der eine Austrittsöffnung (5) und eine Zufuhröffnung (3) für die Kunststoffmasse aufweist sowie einer im Düsenkörper angeordneten, in Längsrichtung axial verschiebbaren Nadel (14) und
1.2 einer Betätigungsvorrichtung (18) zur Betätigung der im Düsenkörper axial in Längsrichtung verschiebbaren Nadel (14) der Nadelverschlußdüse (1) dadurch gekennzeichnet, daß
1.3 der Öffnungshub der in Längsrichtung axial verschiebbaren Nadel (14) der Nadelverschlußdüse (1) einstellbar ist.

2. Nadelverschlußdüsensystem nach Anspruch 1,
dadurch gekennzeichnet, daß
die Nadelverschlußdüse (1) eine Temperiervorrichtung (10) umfaßt.

3. Nadelverschlußdüsensystem nach Anspruch 2,
dadurch gekennzeichnet, daß
die Temperiervorrichtung (10) einen im Düsenkörper angeordneten Hohlkörper (104) umfaßt, der ein zweigängiges Gewinde (106, 108) zur Düsenwand hin aufweist.

4. Nadelverschlußdüsensystem gemäß einem der Ansprüche 1 bis 3,
dadurch gekennzeichnet, daß
die Nadel (14) mit der Betätigungsvorrichtung (18) über eine flexible Kupplung (24) verbunden ist.

5. Nadelverschlußdüsensystem gemäß Anspruch 4,
dadurch gekennzeichnet, daß
die flexible Kupplung (24) derart ausgebildet ist, daß die Nadel (14) quer zur Achsrichtung des Düsenkörpers beweglich ist.

6. Nadelverschlußdüsensystem gemäß einem der Ansprüche 1 bis 5,
dadurch gekennzeichnet, daß
die Betätigungsvorrichtung (18) als Hydraulikantriebssystem ausgebildet ist.

7. Nadelverschlußdüsensystem gemäß einem der Ansprüche 1 bis 6,
dadurch gekennzeichnet, daß
der Düsenkörper durch einen Zwischenraum (22) von der Betätigungsvorrichtung getrennt angeordnet ist.

8. Kunststoff-Spritzgießwerkzeug mit
8.1 mindestens einem Nadelverschlußdüsensystem, dadurch gekennzeichnet, daß
das Nadelverschlußdüsensystem gemäß einem der Ansprüche 1 bis 7 ausgebildet ist.

9. Kunststoff-Spritzgießwerkzeug gemäß Anspruch 8, dadurch gekennzeichnet, daß
die mindestens eine Nadelverschlußdüse des mindestens einen Nadelverschlußdüsensystems in einem Düsenblock und die mindestens eine Betätigungsvorrichtung in einem Antriebsblock angeordnet sind, wobei der Düsenblock mit dem Antriebsblock zu einer Düseneinheit verbunden ist.

10. Kunststoff-Spritzgießwerkzeug gemaß einem der Ansprüche 8 oder 9, dadurch gekennzeichnet, daß
das Kunststoff-Spritzgießwerkzeug eine Vielzahl von Nadelverschlußdüsensystemen umfaßt, wobei die Nadelverschlußdüsen der Vielzalhl von Nadelverschlußdüsensystemen in einer Ebene mit Abstand zueinander angeordnet sind, so daß sich ein bestimmter Stichmaßabstand ergibt.

11. Kunststoff-Spritzgießwerkzeug nach Anspruch 10, dadurch gekennzeichnet, daß
der Stichmaßabstand größer als 1 mm ist.

12. Kunststoff-Spritzgießwerkzeug nach Anspruch 10, dadurch gekennzeichnet, daß
der Stichmaßabstand zwischen 5 und 15 mm liegt.

13. Verwendung eines Kunststoff-Spritzgießwerkzeuges gemäß einem der Ansprüche 8 bis 12 als Kaltkanalangußsystem zur Verarbeitung von Silikonkautschuk.

14. Verwendung eines Kunststoff-Spritzgießwerkzeuges gemäß einem der Ansprüche 8 bis 12 als Heißkanalangußsystem zur Verarbeitung von Thermoplasten.
